Europäisches Patentamt

European Patent Office

Office européen des brevets

(19)

(11) **EP 1 589 521 A2**

(12) **EUROPEAN PATENT APPLICATION**

(43) Date of publication:
　26.10.2005　Bulletin 2005/43

(51) Int Cl.$^7$: **G09G 5/397**

(21) Application number: **05251252.2**

(22) Date of filing: **02.03.2005**

(84) Designated Contracting States:
　**AT BE BG CH CY CZ DE DK EE ES FI FR GB GR
　HU IE IS IT LI LT LU MC NL PL PT RO SE SI SK TR**
　Designated Extension States:
　**AL BA HR LV MK YU**

(30) Priority: **04.03.2004　US 795088**

(71) Applicant: **Jupiter Systems
　San Leandro, California 94577-5720 (US)**

(72) Inventor: **Wogsberg, Eric
　San Leandro, California 94577-5720 (US)**

(74) Representative:
　**McLeish, Nicholas Alistair Maxwell et al
　Boult Wade Tennant
　Verulam Gardens
　70 Gray's Inn Road
　London WC1X 8BT (GB)**

(54) **Compositing multiple full-motion video streams for display on a video monitor**

(57)　Frame tearing in an arbitrarily large number of incoming motion video signals incorporated into a single composite display is prevented using as few as three frame buffers. Independently and concurrently for each incoming motion video signal, one of the frame buffers is reserved for writing captured pixel data, another is identified as storing the most recently completely captured frame, and one is identified as currently being read in forming a frame of the outgoing composite display. Frames of the outgoing composite display are collected from the multiple frame buffers accordingly to designations of the motion video signals of the read frame buffer for each.

DISPLAY 102

MOTION
VIDEO
WINDOW
104A

MOTION VIDEO
WINDOW
104B

~ 106 ~

MOTION VIDEO
WINDOW
104C

# FIGURE 1

EP 1 589 521 A2

**Description**

**FIELD OF THE INVENTION**

This invention relates to the field of video display systems, and more specifically to display of multiple asynchronous video feeds in a single display without frame tearing.

**BACKGROUND**

Many types of motion video are available from a wide variety of sources. Examples of such sources include broadcast television (e.g., NTSC, PAL, etc.), video cameras, and computer displays. Each motion video source has its set of characteristics which can vary from other video sources. Such characteristics include frame rates, dimensions of the image size, and whether the frames are interlaced. For example, frame rates can vary from less than 24 frames per second (fps) to over 100 fps.

Failure to synchronize, or otherwise harmonize display characteristics between, motion video received from a video source and a video display often results in an artifact known as frame tearing. Frame tearing is caused by the changing of the contents of a frame buffer during display. To the viewer, the image displayed appears to be divided between two different images. The images are typically temporally related but displaced. For example, frame tearing of a figure walking across the image may show that the legs are walking slightly in front of the torso. Understandably, this is an undesirable artifact. Internally, the problem is that parts of two different input frames are displayed in one output frame.

Some solutions to the problem of frame tearing have been proposed. U.S. Patent 5,914,711 to Mangerson et al. and U.S. Patent 6,307,565 to Quirk et al. describe respective solutions to frame tearing when motion video from a video source is not synchronized with display of the motion video. However, both described systems involve a full-screen display of the motion image. In other words, the displayed motion video does not share display space with other display elements.

It is desirable to incorporate motion video received asynchronously from a video source into a context of a superset display that includes other display elements. For example, the asynchronous motion video should be displayable in the context of a computer desktop display that includes graphical user interface (GUI) tools to control the display of the asynchronous motion video and/or other components of a computer system. Similarly, the asynchronous motion video should be displayable concurrently with other motion video from other asynchronous motion video sources. Such is useful in the editing of motion video, the simultaneous monitoring of multiple security cameras, and coordination of video coverage of live events using multiple cameras, for example.

In addition to avoiding frame tearing, it is also desirable to minimize delay between receipt and display of each frame of the motion videos. Accordingly, any such solution for frame tearing should also minimize latency between receipt of a frame of motion video and display of that frame.

**SUMMARY OF THE INVENTION**

In accordance with the present invention, multiple incoming motion video signals are independently and concurrently routed to one of a number of frame buffers. For each incoming motion video signal, one of the frame buffers is designated to receive new pixel data representing the incoming frame, another of the frame buffers can be recorded as storing the representation of the most recent completely-received frame, and yet another of the frame buffers contains an earlier complete frame which is being incorporated into a composite display.

The routing is concurrent in that multiple motion video streams are received for incorporation into a single composite display in real time. The routing is independent in that each incoming motion video signal has its own designations for incoming, newly completed, and read frame buffers. For example, a single frame buffer can be currently written-to for one motion video signal, read-from for another motion video signal, and marked as complete but not yet read for yet another motion video signal. The independent and concurrent routing allows as few as three frame buffers to properly manage frames of many motion video signals to avoid frame tearing in all such signals displayed.

In forming the composite display, pixel data is gathered from the multiple frame buffers according to the designations of the various motion video signals for read frame buffers. Specifically, for each pixel, pixel data is retrieved from all of the frame buffers. In addition, a key frame identifies which motion video signal, if any, is visible at that particular pixel. The read frame buffer for the visible motion video signal is selected and the retrieved pixel data from that frame buffer is incorporated into the composite video image.

Frame tearing in the multiple motion video signals is avoided by preventing writing of incoming frames to frame buffers which are being read for the same motion video signal. Specifically, when starting to receive a new frame of a motion video signal, the one of the frame buffers to which to write the incoming pixel data can be any frame buffer other than the one being read in forming the composite video display and the one storing the most recently completed frame of the motion video signal if it differs from the read frame buffer. Upon completion of capture of a frame of the incoming motion video signal, the frame buffer to which the newly completed frame was written is recorded as the most recently completed frame buffer, sometimes referred to as the next read frame buffer. For the next incoming frame of the motion video signal, the process of selecting a frame buffer into which to store the incoming frame is repeated.

As writing of incoming frames of the various motion video signals completes, the frame buffers which store the most recently completed frames change - asynchronously with one another and asynchronously with the completion of scanning of frames of the output composite video display. Thus, a wide variety of frame rates of incoming motion video signals can be accommodated.

To scan the frame buffers to form a new frame of the composite video display image, all designations for read frame buffers are updated from the designations of most recently completed frame buffers. No incoming pixel data is written to any of the most recently completed frame buffers - from which the read frame buffers are updated - due to the manner in which write-frame buffers are selected as described above. Thus, if such updating causes a change in the designation for read frame buffers, the read frame buffers as updated are not write frame buffers.

This mechanism can handle an arbitrarily large number of incoming video streams and can provide a background image over which the motion video streams are displayed. The background image can include a still image ("wallpaper") and/or a computer-generated image of arbitrary complexity and motion. The incoming motion video streams can have widely different characteristics.

This mechanism also automatically repeats input frames as necessary (if the input frame rate is less than the output frame rate) or drops input frames (if the input frame rate is faster than the output frame rate). In particular, if more than one frame of an incoming motion video signal completes during a single output scan of the frame buffers, the frame buffer recorded as storing the most recently completed frame periodically changes multiple times before being used to update the designation of the read frame buffer for that motion video image. Accordingly, all but the last frame completed since the previous output scan completed are dropped. Similarly, if successive output scans of the frame buffers complete before another frame of the motion video signal is received due to a relatively slow frame rate of the motion video signal, there is no change in the frame buffer storing the most recently completed frame at the time the new output scan begins and the previously displayed frame of the motion video signal is repeated in the composite display.

This mechanism represents a substantial improvement over previously existing systems in that frame tearing is avoided in an arbitrarily large number of incoming motion video streams.


## BRIEF DESCRIPTION OF THE DRAWINGS

Figure 1 is a block diagram showing a display which includes multiple motion video windows wherein frame tearing is avoided in the multiple motion video windows in accordance with the present invention.
Figure 2 is a block diagram of compositing system in accordance with the present invention.
Figure 3 is a block diagram of an update logic of Figure 2 in greater detail.
Figure 4 is a logic flow diagram showing the processing of an incoming H-sync in accordance with the present invention.
Figure 5 is a logic flow diagram showing the processing of an incoming V-sync in accordance with the present invention.
Figure 6 is a logic flow diagram showing the selection of a new write frame pointer in Figure 5 in greater detail.
Figure 7 is a logic flow diagram showing an alternative embodiment of the selection of a new write frame pointer.
Figure 8 is a logic flow diagram showing the processing of an outgoing V-sync in accordance with the present invention.
Figure 9 is a block diagram of compositing system in accordance with an alternative embodiment of the present invention.
Figure 10 is a block diagram of an update logic of Figure 9 in greater detail.
Figure 11 is a block diagram of blending logic which can be used in conjunction with the compositing systems of Figures 2 and 9.
Figures 12 and 13 show alternative displays and key frame data, respectively, to illustrate the flexibility in defining visible regions in accordance with the present invention.


## DETAILED DESCRIPTION

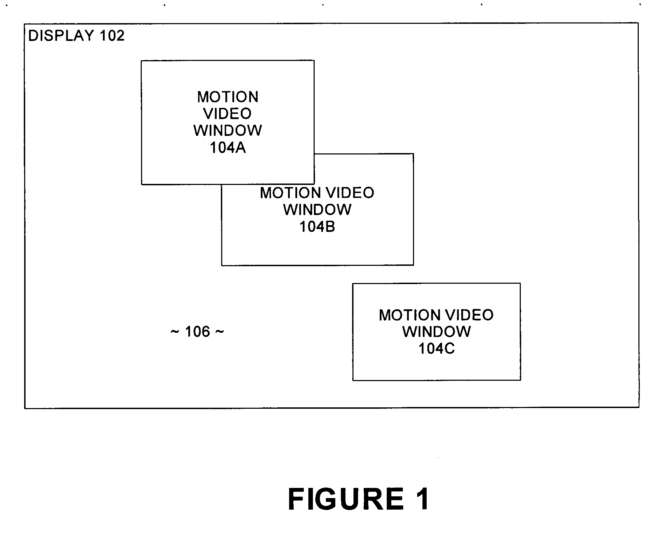

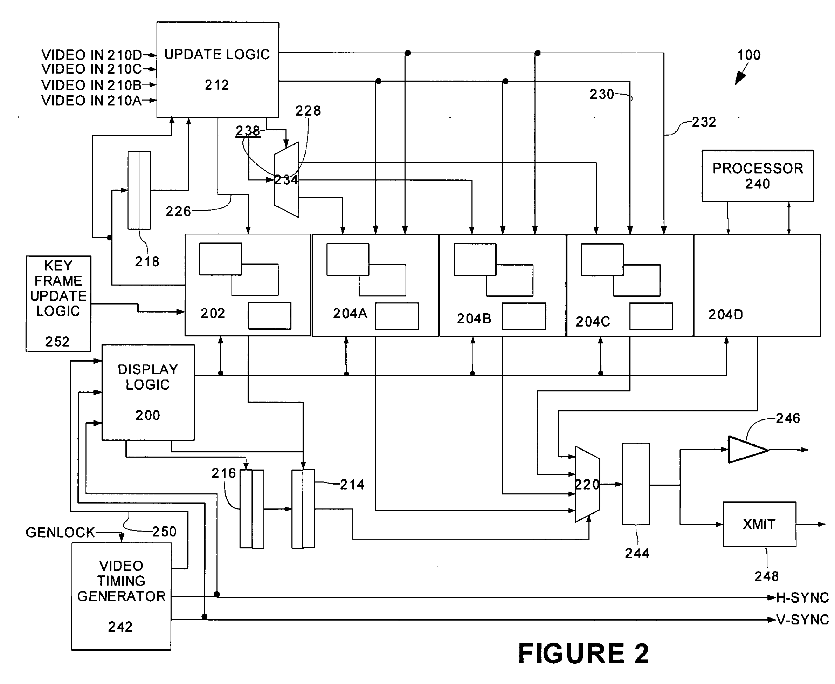

In accordance with the present invention, a number of video sources are routed to various ones of a number of frame buffers 204A-C (Figure 2) of compositing system 100 and output frames are composed from selected portions of the frame buffers. Accordingly, frame tearing in a significant number of video sources can be avoided using only a relatively small number of frame buffers. Specifically, a key frame 202 identifies which areas of frame buffers 204A-D correspond to which of a number of image sources for various portions of a display 102 (Figure 1). Such image sources can be any of a number of incoming asynchronous motion video signals 210A-D (Figure 2), and a background 106 (Figure 1). Read-frame pointers 214 identify which of frame buffers 204A-D is selected for each pixel location in presenting display 102 on a monitor, and write-frame pointers 218 identify to which of frame buffers 204A-C each frame of each motion video signal is written. By coordinating to which frame buffer each incoming frame is written and from which frame buffer each displayed pixel is read, frame tearing is avoided for all motion video displayed.

Figure 1 shows a display 102 which includes a number of motion video windows 104A-C and a background 106. Each of motion video windows 104A-C represents a portion of display 102 dedicated to display of an incoming motion video signal. Thus, "window" is used in the generic sense of a portion of a display which is associated with displayed content. Users of computers frequently experience windows in the context of a window manager such as the sawfish, WindowMaker, IceWM, etc. of the Linux® operating system, the Mac OS® operating system of Apple Computer of Cupertino, California, or any of the Windows® operating systems of Microsoft Corporation of Redmond, Washington. Window managers typically associate a number of graphical user interface (GUI) elements with each window. Herein, such elements are considered part of background 106 since the content of primary concern is the motion video signals represented in motion video windows 104A-C. Specifically, representing motion video requires updating of large amounts of display information at a very fast pace while GUI elements of various window managers and other information presented by the computer to the user typically change to a much smaller degree and/or much less frequently.

Figure 2 shows a key frame 202 and frame buffers 204A-D which collectively represent the visual content displayed in display 102 (Figure 1). Each of frame buffers 204A-D is a frame buffer, i.e:, an array of pixel data which identifies respective colors at respective locations within display 102 and from which display 102 is refreshed at the frame rate of display 102. Thus, to cause display 102 to appear on a display device, pixel data is read from frame buffers 204A-D collectively and is translated to analog or digital signals and included with appropriate timing and ancillary signals (e.g., V-sync and H-sync) to drive the display device. This process is well-known and is only introduced here to facilitate understanding and appreciation of the role frame buffers play generally in rendering display data on a display device. Since frame buffers 204A-D collectively represent all pixels of display 102 to thereby define display 102, any change in display 102 is made by writing new pixel data to one or more of frame buffers 204A-D.

Frame buffers 204A-D are commonly addressed for display. Specifically, frame buffers 204A-D share addressing logic for reading data from frame buffers 204A-D. Similarly, frame buffers 204A-C share addressing logic for writing data to frame buffers 204A-C. In this illustrative embodiment, frame buffer 204D is used to represent visual content other than motion video signals. Accordingly, frame buffer 204D is not commonly addressed for writing. Instead, a processor 240 (such as a CPU or GPU) writes data representing visual content other than motion video signals to frame buffer 204D. Such visual content can include still image and graphical content such as photos, text, buttons, cursors, and various GUI elements of any of a variety of window managers of various operating systems. Herein, background 106 represents all such visual content other than motion video. In an alternative embodiment, frame buffer 204D is omitted and background 106 is written to one or more of frame buffers 204A-C. Proper handling of obscured portions of background 106 is accomplished in a conventional manner by a conventional window manager and such obscured portions are not represented within frame buffers 204A-C.

Key frame 202 is commonly addressed for reading with frame buffers 204A-D and identifies, for each pixel location, which of a number of sources is visible. In this illustrative example, the sources are background 106 or any of a number of incoming asynchronous motion video signals 210A-D, which are sometimes referenced to herein as incoming video signals 210A-D. The dimensions of frame buffers 204A-D correspond to a display resolution of display 102 and collectively define the substantive content of display 102. In this illustrative embodiment, key frame 202 is an array of similar dimensions to the dimensions of frame buffers 204A-D and therefore identifies a source for each individual pixel. In alternative embodiments, key frame 202 identifies a source for each of a number of groups of pixels. In either case, key frame 202 specifies a source for each pixel of display 102.

Key frame update logic 252 controls the contents of key frame 202. For example, various user-interface events can cause motion video windows 104A-C to be positioned as shown in Figure 1. Such events include opening of a window in which to display a motion video, moving of the window, and resizing of the window. All such events are handled by a window manager such as those identified above. The window manager informs key frame update logic 252 of such events such that key frame update logic 252 has sufficient information to determine which video signal is visible at which locations within display 102. Whenever such information changes, key frame update logic 252 changes the contents of key frame 202 to accurately represent the current state of display 102. Key frame update logic 252 also informs update logic 212 of such changes so that pixels of incoming video signals 210A-D are written to appropriate locations within frame buffers 204A-C. Changes in key frame 202 and corresponding address information within update logic 212 occur very infrequently relative to the incoming and outgoing frame rates. Thus, key frame 202 and address information within update logic 212 generally remain unchanged during processing of many incoming and outgoing frames.

Key frame 202 provides pixel-by-pixel control of where each video signal appears in display 102 (Figure 1) thereby giving complete freedom as to the location and size of a video window in display 102. In the illustrative example of Figure 1, each of motion video windows 104A-C and background 106 corresponds to a unique source identifier. For example, key frame 202 stores a source identifier associated with incoming video signal 210B at locations that cause incoming video signal 210B to be visible as motion video window 104B. For each pixel of display 102, key frame 202 (Figure 2) stores these source identifiers to indicate which of incoming video signals 210A-D or background 106 is visible at a particular location.

**[Output Frame Scanning Overview]**

Scanning frame buffers 204A-D collectively to send a frame to display 102 operates as follows. Video timing generator 242 provides timing signals for display 102, including a pixel clock 250 and H-sync and V-sync signals. These signals are used by display logic 200 to scan the frame buffers 204A-D and generate the color information for the display. This color information is then sent to the display with H-sync and V-sync and any other necessary timing signals.

Video timing generator 242 can be free-running or can be synchronized (through well documented methods generally known as GENLOCK) to one of incoming video signals 210A-D or to another video signal with timing that is compatible with display 102.

The scanning of a frame begins with a vertical synchronize signal, sometimes referred to as V-sync, and processing of a first row of pixels begins. For each pixel in the row, display logic 200 retrieves a source identifier for the pixel from key frame 202. Shared read addressing logic between key frame 202 and frame buffers 204A-D causes a color for the pixel to be retrieved from each of frame buffers 204A-D at the same time. Accordingly, display logic 200 uses the source identifier to select one of the retrieved colors to be sent as data representing the subject pixel to be displayed in display 102 (Figure 1).

Read-frame pointers 214 identify a selected one of frame buffers 204A-D which corresponds to each source identifier. In this embodiment, the selected corresponding frame buffer is identified by a control signal applicable to a multiplexer 220 for selection of one of the colors retrieved from frame buffers 204A-D. For example, read-frame pointers 214 can specify that a source whose identifier is "5" (e.g., incoming video signal 210A) is to be retrieved from frame buffer 204B (Figure 2). In this illustrative embodiment, read-frame pointers 214 are represented in a look-up table in which the read-frame pointer corresponding to a source identifier of "5" identifies a two-bit control signal of "01" to select the color from frame buffer 204B at multiplexer 220. Of course, other types of control signals can be used.

In selecting the appropriate color from the appropriate one of frame buffers 204A-D, display logic 200 applies the source identifier retrieved from key frame 202 to read-frame pointers 214 to thereby cause application of the corresponding frame buffer select signal to multiplexer 220. For example, the pixel value selected through multiplexer 220 drives a digital-to-analog converter 246 for display in an analog display device and/or drives a digital transmitter 248 for display in a digital display device. The pixel data can be converted from a numerical value to RGB (or other color format) values through a color lookup table 244 or, alternatively, can be stored in frame buffers 204A-D in a display-ready color format such that color lookup table 244 can be omitted.

Display logic 200 repeats this frame buffer selection process for each pixel of a row of key frame 202 and frame buffers 204A-D. When the row is complete, display logic 200 receives a horizontal synchronize signal, which is sometimes referred to as H-sync, from video timing generator 242. After the H-sync, display logic 200 repeats the process for the next row of pixels. When all rows of pixels have been processed, another V-sync is received from video timing generator 242 and the process begins again at the top of key frame 202 and frame buffers 204A-D.

By using key frame 202 and read-frame pointers 214 in this manner, display logic 200 can read from multiple frame buffers 204A-D to form a single frame of display 102 (Figure 1). What this enables is the distribution of frame writing and reading among multiple frame buffers for multiple incoming asynchronous motion video signals within a larger display signal. For example, an incomplete frame of incoming video signal 210A can be written to frame buffer 204A while a previously completed frame is read from frame buffer 204B. Simultaneously, an incomplete frame of incoming video signal 210B can be written to frame buffer 204B while a previously completed frame is read from frame buffer 204A. In this simple example, display 102 (Figure 1) is defined in part by frame buffer 204A and in part by frame buffer 204B.

In this illustrative embodiment, frame buffer 204D is reserved for the background. Thus, frame buffer 204D also defines a part of display 102 (Figure 1) in this example, particularly the visible parts of background 106.

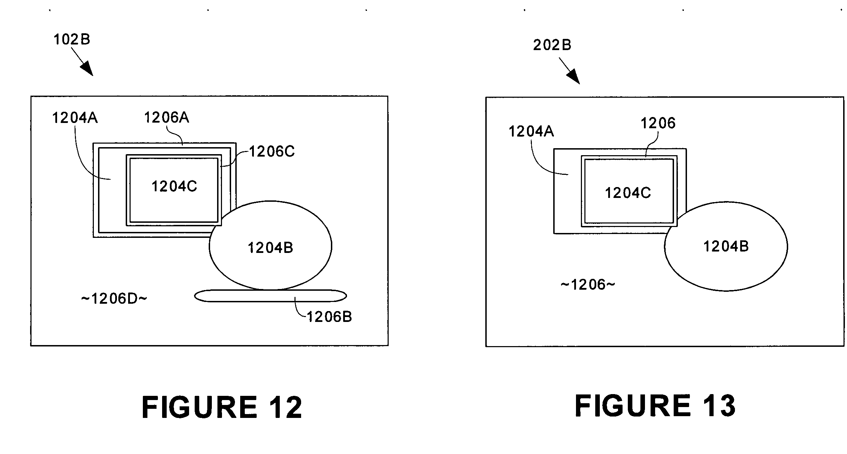

Figures 12-13 illustrate the flexibility provided by key frame 202 (Figure 2) in defining visible parts of display 102. In particular, display 102B (Figure 12) includes three (3) displayed motion videos 1204A-C, each of which includes respective GUI elements represented by regions 1206A-C, respectively. Such GUI elements can include GUI tools for user-controlled play, pause, stop, fast-forward, rewind, etc. and are generally represented by computer-generated graphical elements.

Figure 13 shows a representation 202B of display 102B as represented within key frame 202 (Figure 2). Representation 202B includes a background 1206 which includes regions 1206A-C (Figure 12) and a region 1206D which includes the remainder of display 102B other than motion videos 1204A-C and regions 1206A-C. It should be noted that the shape of background 1206 (Figure 13) is not limited to straight vertical and horizontal borders and is not limited to contiguous regions. In the example of Figure 13, background 1206 includes a rounded border around motion video 1204B and includes a non-contiguous frame region between motion videos 1204A and 1204C. In effect, Figures 12-13 show a picture-in-picture-in-picture capability.

**[Input Frame Writing Overview]**

Multiple incoming video signals are written to frame buffers 204A-C to prevent frame tearing in display 102 as follows. Each of a number of incoming video signals 210A-D is associated through write-frame pointers 218 with a particular respective one of frame buffers 204A-C and is only written to a frame buffer which is not immediately scheduled for access by display logic 200 and read-frame pointers 214 in composing display 102. In particular, the write-frame pointer for each new frame of any of incoming video signals 210A-D is selected to be different from both the read-frame pointer for that incoming signal as represented in read frame pointers 214 and the next read-frame pointer as represented in next read-frame pointers 216.

To compensate for varying frame rates between display 102 and incoming video signals 210A-D without frame tearing, frames of incoming video signals 210A-D are either dropped or repeated such that only full and complete frames are incorporated into display 102. While the process for ensuring that only full and complete frames are displayed is described in greater detail below, the overall process is briefly described to facilitate appreciation and understanding of the avoidance of frame tearing in accordance with the present invention. It is helpful to consider the example of a single incoming video signal, namely, incoming video signal 210A. Incoming asynchronous motion video signals 210B-D are processed concurrently in an analogous manner.

Read-frame pointers 214 indicate which of frame buffers 204A-C represents a full and complete frame of incoming video signal 210A that is being integrated into display 102. Next read-frame pointers 216 indicate which of frame buffers 204A-C represents a most recently completed frame of incoming asynchronous motion video signal 210A that will next be integrated into display 102. Write-frame pointers 218 indicate into which of frame buffers 204A-C the currently incomplete frame of incoming video signal 210A is being written. As writing of each frame of incoming video signal 210A completes, an entry in next read-frame pointers 216 is modified to identify the newly completed frame as the most recently completed frame, and a new frame buffer for the next frame of incoming video signal 210A is selected and represented within write-frame pointers 218. Read-frame pointers 214 are generally not changed until display logic 200 has completed a frame of display 102 and has not yet begun composition of the next frame. At that time, display logic 200 updates read-frame pointers 214 from next read-frame pointers 216.

In selecting the new write-frame pointer for incoming video signal 210A, care is taken to avoid selecting either the read-frame pointer or the next read-frame pointer for incoming video signal 210A. By avoiding selecting the read-frame pointer as the new write-frame pointer for incoming asynchronous motion video signal 210A, writing to frames pointed to by read-frame pointers 214 is prevented. In addition, read-frame pointers 214 are assured to point to complete frames of incoming video signals 210A-D and those frames remain unchanged throughout composition of a complete frame of display 102 by display logic 200. By avoiding selecting the next read-frame pointer as the new write-frame pointer for incoming asynchronous motion video signal 210A, read-frame pointers 214 are assured to point to complete frames of incoming asynchronous motion video signals 210A-D at the time read-frame pointers 214 are updated from next read-frame pointers 216. In particular, at the time read-frame pointers 214 are updated from next read-frame pointers 216, write-frame pointers 218 do not permit writing to any of the frames referenced by read-frame pointers 214 as updated.

Generally, it's preferred to display every frame of an incoming video signal in display 102 once and only once and for the amount of time that is intended as defined by the native timing of the incoming video signal. However, such would require an exact match in the frame rate of the incoming video signal with the frame rate of display 102. Frequently, the frame rate of the incoming video signal differs from the frame rate of display 102 requiring that frames of the incoming video signal are dropped or repeated. If the frame rate of the incoming video signal is greater than the frame rate of display 102, the incoming video signal includes too many frames to be displayed by display 102 and some frames of the incoming video signal are dropped and not displayed in display 102. If the frame rate of the incoming video signal is less than the frame rate of display 102, too few frames are included in the incoming video signal for display only once in display 102 and some frames of the incoming video signal are repeated in display 102.

Dropping of frames of incoming video signal 210A occurs when the frame rate of incoming video signal 210A is greater than the frame rate of display 102. In this situation, the one of write-frame pointers 218 corresponding to incoming video signal 210A changes more frequently than the frequency of updating of the corresponding one of read-frame pointers 214. The following example is illustrative, consider that read-frame pointers 214 indicate that the currently scanned frame buffer which includes a frame of incoming video signal 210A is frame buffer 204A. Consider further that next read-frame pointers 216 indicates that the frame buffer which includes the most recently completed and next-scanned frame of incoming video signal 210A is frame buffer 204B. Write-frame pointers 218 therefore cause the currently received frame of incoming video signal 210A to be written to a frame buffer other than frame buffers 204A-B, i.e., frame buffer 204C in this example. This state is summarized in Table A below.

Table A

| Incoming Asynchronous Motion Video Signal 210A Preceding State | |
|---|---|
| Read frame buffer | frame buffer 204A |
| Next read frame buffer | frame buffer 204B |
| Write frame buffer | frame buffer 204C |

Since the incoming frame rate is greater than the display frame rate in this example, output scanning of some frames does not complete before writing of one or more incoming frames complete. In such cases, read-frame pointers 214 continue to indicate that the scanned frame buffer for incoming video signal 210A is frame buffer 204A when writing of the incoming frame into frame buffer 204C completes. The newly completed frame is represented in next read-frame pointers 216 by pointing to frame buffer 204C in this example, and the previously completed frame of incoming video signal 210A in frame buffer 204B as previously pointed to by next read-frame pointers 216 is dropped. This state is summarized in Table B below.

Table B

| Incoming Asynchronous Motion Video Signal 210A Subsequent State at a Faster Frame Rate | |
|---|---|
| Read frame buffer | frame buffer 204A |
| Next read frame buffer | frame buffer 204C |
| Write frame buffer | frame buffer 204B |

Since the incoming frame was completely written before scanning of frame buffer 204A completed, the corresponding one of next read-frame pointers 216 changed before its prior value could be copied to read-frame pointers 214. The frame of incoming video signal 210A which was represented in frame buffer 204B in the state represented by Table A will not be displayed in display 102 and is therefore dropped.

Multiple frames can be dropped as incoming frames are alternately written to frame buffers 204B and 204C in the manner described above until display logic 200 finishes scanning of frame buffer 204A for display of the current frame of display 102 and copies next read-frame pointers 216 to read-frame pointers 214.

Repetition of frames of incoming video signal 210A occurs when the frame rate of incoming video signal 210A is less than the frame rate of display 102. In this situation, the write-frame pointer of incoming video signal 210A will change less frequently than the frequency of updates to read-frame pointers 214 from next read-frame pointers 216. The following example is illustrative, consider the same situation represented in Table A above in which frame pointers 214, 216, and 218 respectively indicate that frame buffers 204A, 204B, and 204C store, respectively, the currently scanned frame, the most recently completed and next-read frame, and the currently written frame of incoming video signal 210A. Since the incoming frame rate is less than the display frame rate in this example, scanning of some output frames completes before writing of corresponding incoming frames complete. In such cases, updating read-frame pointers 214 from next read-frame pointers 216 causes both to associate frame buffer 204B with incoming motion video signal 210A. This state is summarized in Table C below.

Table C

| Incoming Asynchronous Motion Video Signal 210A Subsequent State at a Slower Frame Rate | |
|---|---|
| Read frame buffer | frame buffer 204B |
| Next read frame buffer | frame buffer 204B |
| Write frame buffer | frame buffer 204C |

If scanning of the next frame of display 102 completes before an additional complete frame of incoming video signal 210A is received and written, next read-frame pointers 216 continue to indicate that the most recently completed frame of incoming video signal 210A is still represented in frame buffer 204B. Accordingly, the next updating of read-frame pointers 214 from next read-frame pointers 216 causes no change in read-frame pointers 214 with respect to incoming video signal 210A. Thus, in another frame of display 102, Table C continues to accurately represent the state of incoming video signal 210A. Accordingly, the frame of incoming video signal 210A represented in frame buffer 204B is incorporated in another frame of display 102, thereby repeating that frame of incoming video signal 210A.

Incoming asynchronous motion video signals generally, and incoming video signals 210A-D specifically, are each a stream of digital pixel color values. Each stream includes H-sync and V-sync signals. H-sync separates the last pixel of one scan line of a motion video frame from the first pixel value of the next scan line. A scan line refers to a single row of pixels. V-sync separates the last pixel of one frame of a motion video signal from the first pixel of the next frame. A frame refers to a single image of the multiple sequential images of a motion video signal. In this illustrative embodiment, incoming asynchronous motion video signals 210A-D have all been preprocessed such that incoming asynchronous motion video signals 210A-D are in a size and format ready for display in display 102 without further modification. For example, any resizing, color mapping, de-interlacing, etc. has already been performed on incoming video signals 210A-D. It should be noted that incoming video signals 210A-D can differ from display 102 and from one another in size, frame rates, phase (timing of V-sync signals), dimensions, etc.

Multiple incoming video signals 210A-D are processed as follows. A number of incoming video signals 210A-D are received by update logic 212. While four (4) incoming asynchronous motion video signals are shown in Figure 2, it should be appreciated that nothing in the system described herein should be limited to that number. Fewer or more incoming video signals can be processed in the manner described herein.

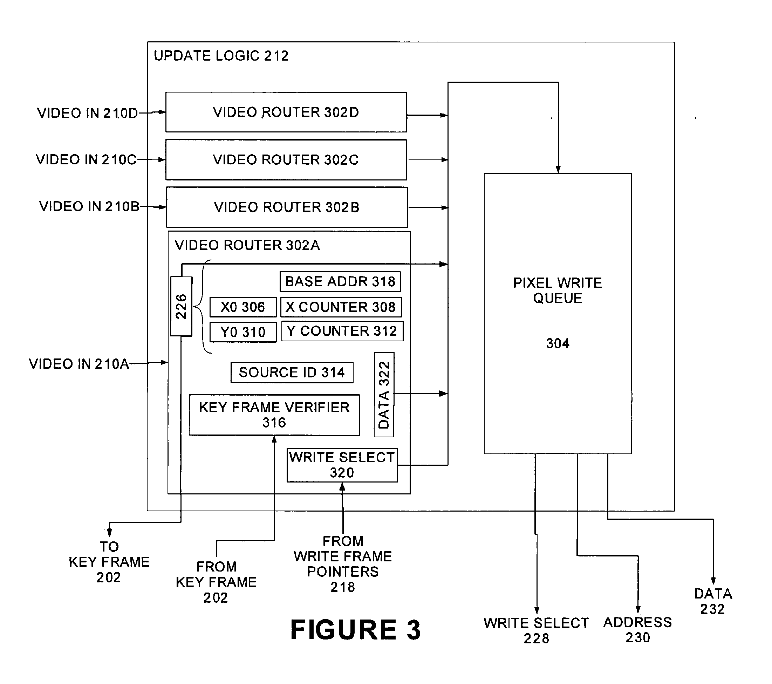

Update logic 212 is described more completely below in the context of Figure 3. Briefly, update logic 212 correlates incoming pixels to pixel locations within display 102 (Figure 1), and therefore to addresses within key frame 202 (Figure 2) and frame buffers 204A-C. Update logic 212 coordinates the receipt and writing of the incoming pixel data with associated translated addresses. The output of update logic 212 is a series of pixel records, each of which includes pixel data 232 representing a color, an address 230 for that pixel data, and a write select signal 228. Write select signal 228 of each pixel controls to which of frame buffers 204A-C pixel data 232 is written. Update logic 212 retrieves write select signal 228 from write-frame pointers 218 using a source identifier associated with the particular incoming video signal. Write select signal 228 controls to which of frame buffers 204A-C pixel data 230 gets written using a demultiplexer 234 in a complementary manner to that described above with respect to read-frame pointers 214 and multiplexer 220. Specifically, write select signal 228 routes write enable signal 238 through demultiplexer 234 to a selected one of frame buffers 204A-C. Address 230 and pixel data 232 are routed to all of frame buffers 204A-C. Write select signal 228 and write enable signal 238 collectively specify, and enable writing to, only one of frame buffers 204A-C. Accordingly, write-frame pointers 218 allow each of the multiple incoming video signals 210A-D to be written to a different one of frame buffers 204A-C. Similarly, write-frame pointers 218 allow changing of the written one of frame buffers 204A-C by simply changing a corresponding one of write-frame pointers 218.

Thus, update logic 212 distributes incoming pixels among frame buffers 204A-C and display logic 200 collects the pixels from among frame buffers 204A-C to compose display 102. Careful management of write-frame pointers 218 and read-frame pointers 214 prevents frame tearing in any of the video signals displayed in display 102.

**[Incoming Frame Writing in Greater Detail]**

Update logic 212 is shown in greater detail in Figure 3. Each of incoming video signals 210A-D is received by a respective one of video routers 302A-D. As described above, incoming video signals and corresponding video routers can be fewer or more than the four (4) shown in Figures 2 and 3. Video routers 302A-D are analogous to one another. Accordingly, the following description of video router 302A is equally applicable to each of video routers 302B-D.

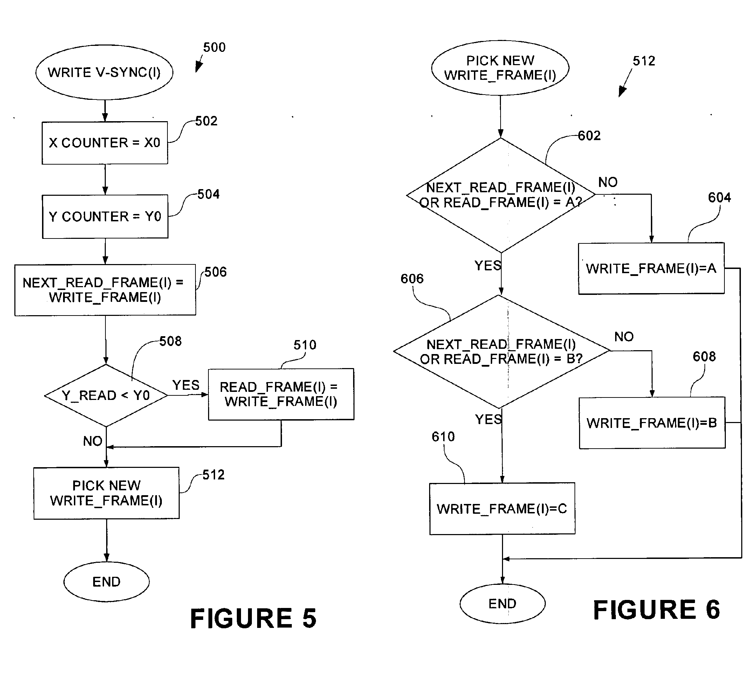

Video router 302A includes a starting X address 306, an X counter 308, a starting Y address 310, a Y counter 312, and a base address 318. These values map incoming pixels to corresponding locations within key frame 202 (Figure 2) and frame buffers 204A-C. Starting X address 306 (Figure 3) and starting Y address 310 are initialized at generally the same time values in key frame 202 are initialized, e.g., generally in response to any user interface event which causes any of motion video windows 104A-C (Figure 1) to change size or move. Collectively, starting X address 306 (Figure 3) and starting Y address 310 along with base address 318 define the address within key frame 202 (Figure 2) and frame buffers 204A-C at which the first pixel of an incoming frame is to be written. When a V-sync of incoming video signal 210A is received, update logic 212 sets X counter 308 to equal starting X address 306 in step 502 (Figure 5) and sets Y counter 312 to equal starting Y address 310 in step 504 (Figure 5). The remainder of logic flow diagram 500 is described below.

X counter 308 and Y counter 312 are incremented as needed to represent the address within key frame 202 and frame buffers 204A-C to which pixel data is to be written. As each pixel of incoming video signal 210A is received, update logic 212 increments X counter 308 since video signals are typically scanned horizontally, one row at a time. In this illustrative embodiment, X counter 308 and Y counter 312 are used to calculate a destination address within frame buffers 204A-C according to the following equation:

$$DestinationAddress = BaseAddress318 + Xcounter308 + (Ycounter312 \times Width_{FB}) \qquad (1)$$

Base address 318 refers to the address of the upper left corner of any of frame buffers 204A-C. In an alternative embodiment, multiplication operations are reduced for efficiency by using a single address register which is initialized at V-sync to the sum of base address 318 and X0 306, is incremented for each pixel, and is incremented by a stride value at H-sync. The stride value is the difference between the width of frame buffers 204A-C and the width of incoming asynchronous motion video signal 210A. Thus, equation (1) is replaced with individual addition operations in this alternative embodiment.

Video router 302A also includes a source identifier 314 which identifies incoming video signal 210A as a content source each frame of which is to be treated by pointers 214, 216, and 218 as a single entity. Source identifier 314 is unique with respect to all other source identifiers used by compositing system 100. In the context of describing video router 302A, the source identified by source identifier 314 is sometimes referred to as the subject source. Key frame verifier 316 of video router 302A verifies that key frame 202 (Figure 2) indicates that the subject source is visible at the location specified by base address 318, X counter 308, and Y counter 312 which collectively specify an address 226. Key frame verifier 316 makes such a determination by comparing source identifier 314 to the source identified within key frame 202 at address 226. If the subject source is visible at address 226, i.e., if the source identifier from key frame 202 matches source identifier 314, key frame verifier 316 adds data representing the current pixel to pixel write queue 304. Otherwise, video router 302A drops the current pixel and the current pixel is not added to pixel write queue 304.

When key frame verifier 316 retrieves a source identifier from key frame 202, the same source identifier is applied to write-frame pointers 218 (Figure 2) and the pointer associated with the retrieved source identifier is received in write select 320 (Figure 3) of video router 302A. While source identifier 314 identifies incoming video signal 210A as the source, write select 320 identifies one of frame buffers 204A-C into which pixels of incoming video signal 210A are to be written.

To add the current pixel to pixel queue 304 if the current pixel is visible, update logic 212 writes pixel data 322 representing the current pixel, address 226, and write select 320 of video router 302A to pixel write queue 304. Analogous pixel records from video routers 302B-D are similarly placed in pixel write queue 304 for writing to frame buffers 204A-C in turn.

Update logic 212 writes pixels from pixel write queue 304 to frame buffers 204A-C as follows. Write enable 238 is always on. Update logic 212 retrieves a pixel from pixel write queue 304, sometimes referred to as the write pixel in the context of pixel write queue 304. The write pixel includes pixel data 232, a pixel address 230, and a write select 226. As shown in Figure 2, pixel data 232 and pixel address 230 of the write pixel are applied simultaneously to frame buffers 204A-C. Write select 226 identifies a selected one of frame buffers 204A-C as described above with respect to write select 320. Write select 226 controls demultiplexer 234 to send write enable 238 to the selected one of frame buffers 204A-C, and demultiplexer 234 sends write disable signals to the others of frame buffers 204A-C.

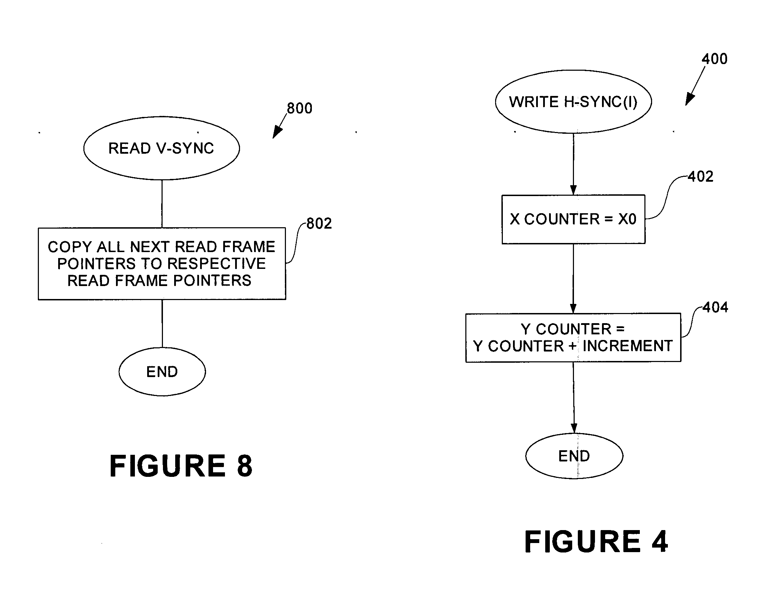

When an entire row of pixels has been received, video router 302A receives an H-sync indicating that the next pixel will be on a new line. Logic flow diagram 400 (Figure 4) represents processing by video router 302A in response to the H-sync. In step 402, video router 302A (Figure 3) resets X counter 308 to starting X address 306. In step 404 (Figure 4), video router 302A (Figure 3) increments Y counter 312. Thus, X counter 308 and Y counter 312 with base address 318 continue to represent the appropriate address within key frame 202 and frame buffers 204A-C as a new row of pixels is received. As described above in conjunction with an alternative embodiment, an address counter is incremented by a stride in that alternative embodiment rather than the processing shown in logic flow diagram 400.

When an entire frame of pixels has been received, video router 302A receives a V-sync which indicates that the current frame has been completely received and a new frame will be starting with the next pixel. Logic flow diagram 500 (Figure 5) represents processing by video router 302A in response to the V-sync. In addition to maintaining proper address mapping as described above regarding steps 502-504, video router 302A indicates that a complete new frame of incoming video signal 210A has been stored and is ready for display by display logic 200. Specifically, video router 302A copies the one of write-frame pointers 218 corresponding to source identifier 314 to a next read-frame pointer of next read-frame pointers 216 for the same source identifier. Next read-frame pointers 216 identify which of frame buffers 204A-D contains the most recently completed frame for each source.

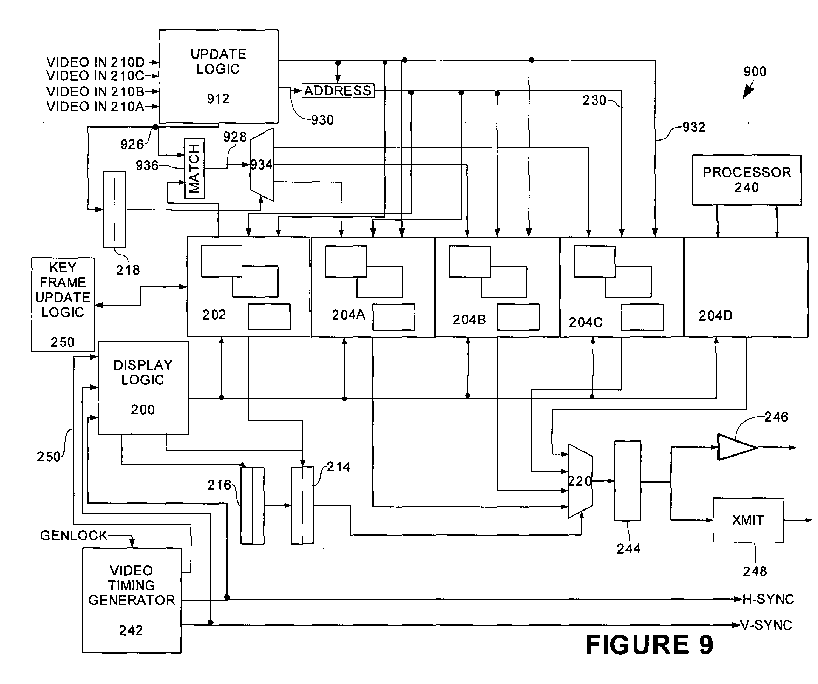

As shown in logic flow diagram 800 (Figure 8), when display logic 200 (Figure 2) receives a V-sync signal indicating a new output frame is to start, display logic 200 copies next read-frame pointers 216 into read-frame pointers 214 in step 802 (Figure 8) such that the most recently completed frames for each source are included in the newly started output frame for display 102 (Figure 1).

In one embodiment, processing by video router 302A (Figure 3) according to logic flow diagram 500 (Figure 5) transfers from step 506 directly to step 512. In step 512, video router 302A selects a new one of frame buffers 204A-C into which to write the next frame of incoming asynchronous motion video signal 210A. Video router 302A modifies the write-frame pointer corresponding to source identifier 314 within write-frame pointers 218 to identify that next one of frame buffers 204A-C. Step 512 is described below in greater detail.

Steps 508-510 represent a performance enhancement to reduce latency according to an alternative embodiment. In test step 508, video router 302A compares the row of key frame 202 and frame buffers 204A-D currently scanned by display logic 200 to starting Y address 310. The row currently scanned by display logic 200 is sometimes referred to herein as the current display line. If the current display line is before starting Y address 310, display logic 200 has not yet begun display of the source served by video router 302A, and the just-completed frame of incoming video signal 210A can be included in the current frame of display 102. Accordingly, router 302A copies the write-frame pointer of write-frame pointers 218 corresponding to source identifier 314 to the read-frame pointer of read-frame pointers 214 for the same source identifier. Thus, display logic 200 will display the just-completed frame of the source of video router 302A in the current output frame rather than waiting for the next display V-sync. As a result, latency is reduced between incoming asynchronous motion video signal 210A and the display thereof in display 102.

Conversely, if the currently displayed line is equal to or greater than starting Y address 310, video router 302A skips step 510 and processing transfers to step 512. Step 512 is shown in greater detail as logic flow diagram 512 (Figure 6).

Briefly, video router 302A (Figure 3) selects a new one of frame buffers 204A-C (Figure 2) into which to write the next frame of incoming video signal 210A by selecting any of frame buffers 204A-C which is not indicated as being read from in either read-frame pointers 214 or next read-frame pointers 216. Stated another way, the next write-frame can be any frame other than the current read-frame and the frame to be read next. Of course, this can be achieved in any of a number of ways, one of which is shown in logic flow diagram 512 (Figure 6) as part of this illustrative embodiment.

In test step 602, video router 302A (Figure 3) determines whether either read-frame pointers 214 (Figure 2) or next read-frame pointers 216 associate frame 204A with the subject source. If not, processing transfers to step 604 (Figure 6) in which video router 302A (Figure 3) associates frame 204A (Figure 2) with the subject source within write-frame pointers 218.

Conversely, if either read-frame pointers 214 or next read-frame pointers 216 associate frame 204A with the subject source, processing transfers to test step 606 (Figure 6). In test step 606, video router 302A (Figure 3) determines whether either read-frame pointers 214 (Figure 2) or next read-frame pointers 216 associate frame 204B with the subject source. If not, processing transfers to step 608 (Figure 6) in which video router 302A associates frame 204B with the subject source within write-frame pointers 218.

Conversely, if either read-frame pointers 214 or next read-frame pointers 216 associate frame 204B with the subject source, processing transfers to test step 610. In step 610, video router 302A associates frame 204C with the subject source within write-frame pointers 218.

After any of steps 604, 608, or 610, processing according to logic flow diagram 512, and therefore step 512 (Figure 5), completes. After step 512, processing according to logic flow diagram 500 in response to a V-sync in incoming video signal 210A completes.

The result of processing according to logic flow diagram 500 is that video router 302A (i) keeps accurate track of the pixel address mapping from incoming video signal 210A to the pixel address space of key frame 202 and frame buffers 204A-C and (ii) ensures that the next frame of incoming video signal 210A is written to one of frame buffers 204A-C that is not immediately scheduled for access by display logic 200 for the subject source.

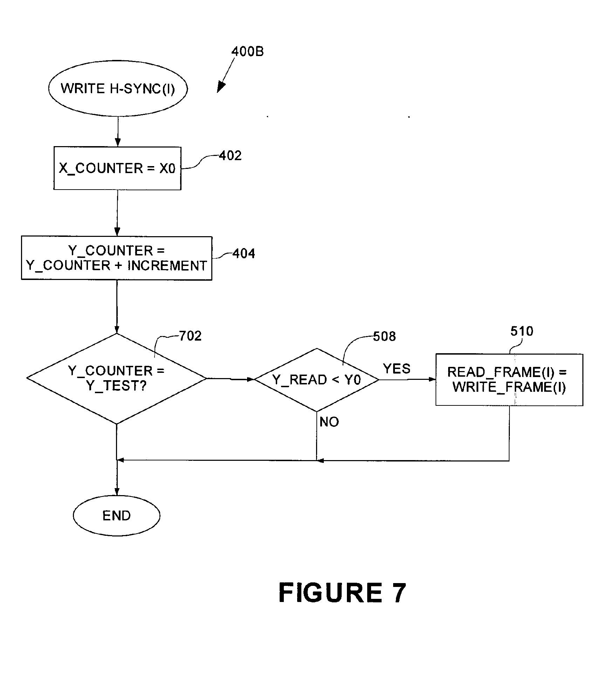

As described above with respect to logic flow diagram 500 (Figure 5), latency between receipt of an incoming frame of motion video and display of that frame is reduced by including test step 508 and step 510 for the reasons described above. Such latency can be further reduced by performing steps 508-510 at a time earlier than in response to a V-sync in the incoming video signal. This is illustrated by logic flow diagram 400B (Figure 7) which is an alternative to logic flow diagram 400 (Figure 4) for processing in response to an H-sync in the incoming motion video signal.

Logic flow diagram 400B (Figure 7) includes steps 402-404 which are as described above with respect to Figure 4. Processing transfers from step 404 (Figure 7) to test step 702 in which video router 302A (Figure 3) determines whether Y counter 312 indicates that the currently incoming row of pixels of incoming video signal 210A is a predetermined test row. The predetermined test row represents a threshold at which the incoming frame of incoming video signal 210A will be completely received in less time than output scanning of the entire incoming frame will take. This relationship can be represented as follows:

$$Time_{read}\ (Y_0 \Rightarrow Y_{end}\ ) < Time_{write}\ (Y_{test} \Rightarrow Y_{end}) \tag{2}$$

In equation (2), $Time_{read}$ $(Y_0 \Rightarrow Y_{end})$ represents the time required to read a frame of incoming video signal 210A from frame buffers 204A-C. This value depends upon the frame rate of display 102 and the number of scan lines occupied by a frame of incoming video signal 210A.

$Time_{write}(Y_{test} \Rightarrow Y_{end})$ represents the time required to store a portion of a frame of incoming signal 210A to frame buffers 204A-C where the portion includes a row identified by $Y_{test}$ to the end of the frame. This value depends upon the frame rate of incoming video signal 210A and the selected row identified by $Y_{test}$. $Y_{test}$ is chosen as the earliest row within incoming video signal 210A such that equation (2) is true.

In test step 702 (Figure 7), video router 302A determines whether the incoming row of pixels is the row identified as the test row. If not, processing according to logic flow diagram 400B completes.

Conversely, if the incoming row of pixels is the predetermined test row, processing transfers to steps 508-510 which are described above with respect to Figure 5. Thus, the reduction of latency described above with respect to steps 508-510 can be applied in instances in which receipt of a frame is not yet complete but will complete before output scanning of the entire incoming frame can complete.

**[Alternative Embodiments of Compositing System 100 and Update Logic 212]**

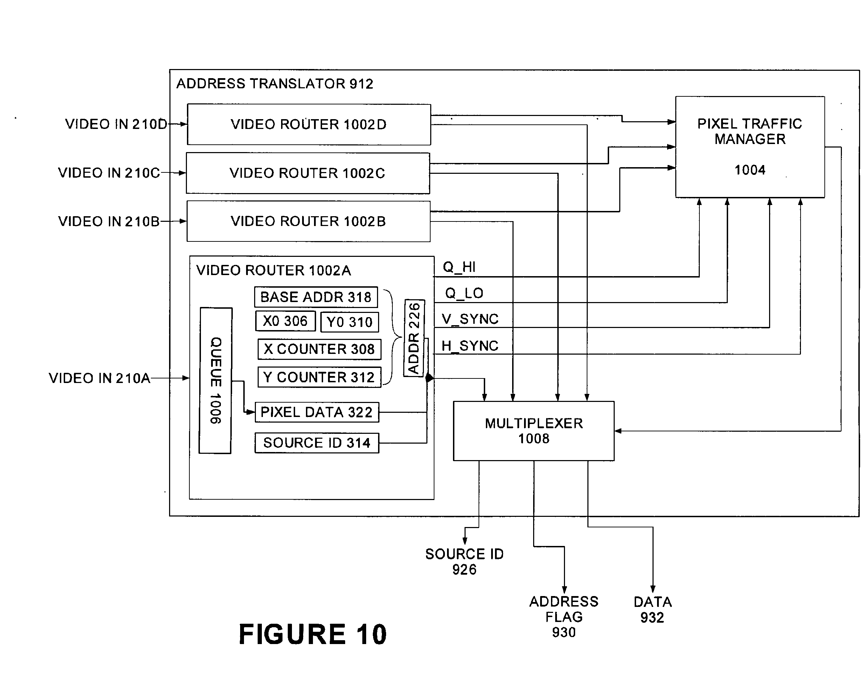

Figures 9 and 10 show alternative embodiments compositing system 900 and update logic 912 of compositing system 100 (Figure 2) and update logic 212 (Figure 3), respectively. Figures 9 and 10 are directly analogous to Figures 2 and 3, respectively, except as otherwise noted below. Like-numbered elements of the figures are directly analogous to one another.

In Figure 9, update logic 912 provides source identifier signal 926. Unlike update logic 212 (Figure 2), update logic 912 (Figure 9) does not include occlusion checking by comparison of source identifier 314 (Figure 10) to the visible source as represented in key frame 202 (Figure 9). Instead, the logic for occlusion checking is outside of update logic 912.

In particular, update logic 912 sends source identifier 926 to both write-frame pointers 218 and to matching logic 936. Matching logic 936 compares source identifier 926 to a source identifier retrieved from key frame 202 using the same address signal applied to frame buffers 204A-C, namely, address flag 930 in conjunction with data 932 which collectively specify an address in the manner described below. Matching logic 936 produces a write enable signal 928 which enables writing if source identifier 926 matches the source identifier retrieved from key frame 202 and disables writing otherwise.

Demultiplexer 934 applies write enable signal 928 to one of frame buffers 204A-C according to control signals retrieved from write-frame pointers 218 and disables writing to all others of frame buffers 204A-C. The control signals from write-frame pointers 218 correspond to source identifier 926. Of course, other logic can be used to apply write enable signal 928 to one of frame buffers 204A-C according to the one of write-frame pointers 218 corresponding to source identifier 226 and to disable writing to all others of frame buffers 204A-C.

For economy in the amount of data moved in compositing system 900, addresses do not accompany each individual pixel value to be written. Instead, pixel values are gathered to be written in streams of sequential addresses in a manner described more completely below. Specifically, data lines 932 include either address data or pixel data as indicated by address flag 930. If address flag 930 indicates that an address is present on data lines 932, addressing logic of key frame 202 and frame buffers 204A-C store that address. Conversely, if address flag 930 indicates that pixel data is present on data lines 932, the pixel data is written to the previously stored address and the stored address is then incremented, specifying the next pixel location to be written to. In this manner, a stream of pixel data can be written following a single specified address since the address for subsequent pixel data is incremented automatically.

Update logic 912 is shown in greater detail in Figure 10. Video router 1002A includes a queue 1006 in which received pixel data is buffered along with end-of-frame V-sync and end-of-line H-sync signals to assist in identifying relative pixel locations within a frame of incoming video signal 210A. Addresses within frame buffers 204A-C are derived in the manner described above using data fields 306-312 and 318. A pixel traffic manager 1004 controls access to frame buffers 204A-C from video routers 1002A-D through a multiplexer 1008.

Pixel traffic manager 1004 uses information regarding the respective queues of video routers 1002A-D, e.g., queue 1006, to group pixel data from the various queues into batches for optimized access of frame buffers 204A-C. Specifically, video router 1002A sends Q_HI, Q_LO, V-sync, and H-sync signals to pixel traffic manager 1004. Video routers 1002B-D send analogous signals to pixel traffic manager 1004. The Q_HI signal from video router 1002A indicates that queue 1006 is relatively full and suggests to pixel traffic manager 1004 that video router 1002A might warrant priority in gaining access to frame buffers 204A-C. The Q_LO signal indicates that queue 1006 is relatively low and suggests to pixel traffic manager 1004 that video router 1002A might warrant a lower priority such that other video routers can have access to frame buffers 204A-C. V-sync and H-sync signals allow pixel traffic manager 1004 to time changing of access through multiplexer 1008 to coincide with the need to send addresses to frame buffers 204A-C. Whenever any of video routers 1002A-D gain access through multiplexer 1008, the video router gaining access sends new address data through multiplexer 1008 to frame buffers 204A-C.

Pixel traffic manager 1004 avoids sending of address data whenever possible by maximizing the number of pixels of a particular scan line of an incoming video signal to be written in a contiguous sequence. Preferably, pixel traffic manager 1004 only causes transitions of access through multiplexer 1008 from one of video routers 1002A-D to another in situations in which a new address is likely to be specified anyway. Unless a particular source occupies the entire width of frame buffers 204A-C, any H-sync signal will cause a non-sequential jump in the address to which to write pixel data. Accordingly, pixel traffic manager 1004 changes access when the current video router sends an H-sync signal to pixel traffic manager 1004. In the context of Figure 10, the current video router is the one of video routers 1002A-D with current access through multiplexer 1008.

Unless a particular source occupies the entirety of frame buffers 204A-C, any V-sync signal will cause a non-sequential jump in the address to which to write pixel data. Accordingly, pixel traffic manager 1004 changes access when the current video router sends a V-sync signal to pixel traffic manager 1004. H-syncs and V-syncs of incoming video signals are generally good times to switch to processing buffered pixel data of another incoming video signal.

When changing access through multiplexer 1008, pixel traffic manager 1004 uses received Q_HI and Q_LO signals to attribute relative levels of priority among video routers 1002A-D.

By avoiding sending address information for each pixel written, the embodiment of Figures 9-10 minimizes the requisite data/address access cycles of frame buffers 204A-C and therefore provides efficient write access to frame buffers 204A-C. Such efficient write access is particularly important when processing multiple motion video signals in real time. However, processing of occluded pixels occupies write cycles. If a particular pixel to be written is occluded as represented in key frame 202, write enable signal 928 disables all writing during the write cycle in which the occluded pixel is processed. In contrast, the embodiment of Figures 2-3 discards occluded pixels avoiding wasting of access cycles of frame buffers 204A-C, thereby also providing efficient write access to frame buffers 204A-C.

**[Picture Over Picture Blending]**

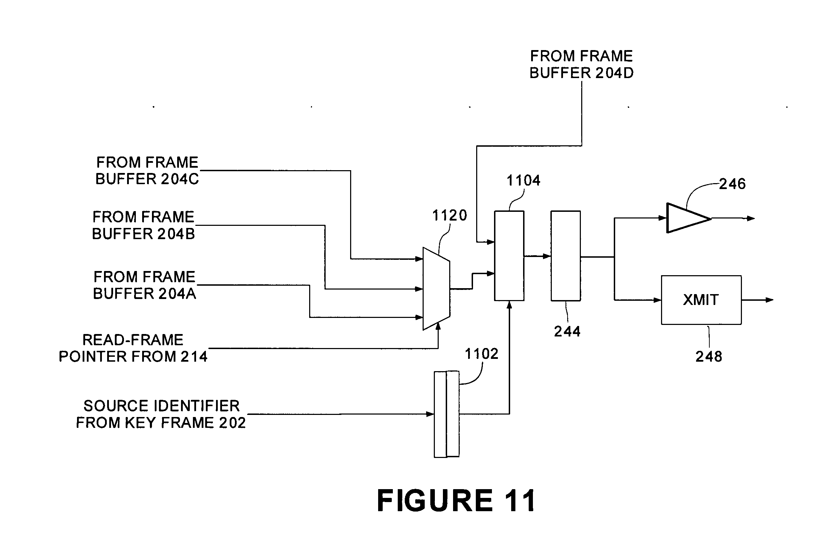

Figure 11 shows a variation which can be applied to either compositing system 100 (Figure 2) or compositing system 900 (Figure 9). A blend ratio array 1102 associates blend ratios with each source identifier used in read-frame pointers 214 (Figure 2), next read-frame pointers 216, and write frame pointers 218. Specifically, an opacity is specified in blend ratio array 1102 for each source identifier. Opacity is represented by a numerical value ranging from zero to one where zero represents fully transparent (i.e., invisible) and one represents fully opaque.

Multiplexer 220 of Figures 2 and 9 is replaced with multiplexer 1120 (Figure 11) which receives pixel data from only frame buffers 204A-C. Pixel data from frame buffer 204D is received by a blender 1204. Blender 1104 also receives pixel data through multiplexer 1220 which is selected from frame buffers 204A-C according to the frame pointer selected from read-frame pointers 214 in the manner described above. Blender 1104 blends the received pixel data according to an opacity received from blend ratio array 1102. The blending performed by blender 1104 is described by the following equation.

$$Pixel_{1104} = \alpha \times Pixel_{1120} + (1-\alpha) \times Pixel_{204D} \qquad (3)$$

In equation (3), $\alpha$ represents the opacity of the received pixel data. Blend ratio array 1102 allows various opacities to be specified for multiple incoming asynchronous motion video signals and to be modified easily and independently. Accordingly, each of the video windows represented in display 102 can have varying degrees of transparency.

The above description is illustrative only and is not limiting. Instead, the present invention is defined solely by the claims which follow and their full range of equivalents.

**Claims**

1. A frame buffer device comprising:

    a. two or more frame buffers;

b. key data which specifies, for each of two or more portions of a displayed image, a corresponding one of two or more display components, at least one of which is a motion video signal;

c. for each of the two or more display components:

i. a read-frame pointer which identifies a read one of the frame buffers from which the display component is to be read for display;

ii. a write-frame pointer which identifies a write one of the frame buffers to which additional received data representing the display component is to be written;

d. update logic which (i) detects a new frame in the motion video signal, (ii) records that a selected one of the frame buffers which is associated with the motion video signal is ready to be read, and (iii) modifies the write-frame pointer associated with the motion video signal; and

e. display logic which detects a new frame in the displayed image and, in response, updates the read-frame pointers to identify selected ones of the two or more frames buffers representing recently completed display components as recorded by the write logic.

2. The frame buffer device of Claim 1 wherein the read frame buffer identified by the read-frame pointer of the motion video signal contains a complete frame of the motion video signal.

3. The frame buffer device of Claim 2 wherein incoming data of the motion video signal is written to the write frame buffer identified by the write-frame pointer of the motion video signal.

4. The frame buffer device of Claim 1 further comprising:

c. iii. a next read-frame pointer for each of the two or more display components, wherein the next read-frame pointer identifies a next one of the frame buffers which includes a frame of the display component which is ready for display in the displayed image.

5. The frame buffer device of Claim 4 wherein the update logic records that a selected one of the frame buffers which is associated with the motion video signal is ready to be read by associating the selected frame buffer with the motion video signal in the next read-frame pointer of the motion video signal.

6. The frame buffer device of Claim 4 wherein the display logic updates the read-frame pointers by copying the next read-frame pointers to the read-frame pointers.

7. The frame buffer device of Claim 4 wherein the update logic:

i. determines that, at a time at which a new portion of a selected one of the display components is complete and ready for display, reading of frame buffer data defining the display image of a current frame of the display image has begun but has not yet reached representation of the selected display component in the frame buffers;

ii. in response to such a determination and at a time prior to reading of the representation of the selected display component in the frame buffers, records that a selected one of the frame buffers which is associated with the selected display component is ready to be read by associating the selected frame buffer with the selected display component in the read-frame pointer of the selected display component.

8. The frame buffer device of Claim 1 wherein the portions of the displayed image are pixels.

9. The frame buffer device of Claim 1 wherein at least one of the display components is a background.

10. The frame buffer device of Claim 9 wherein the background includes computer-generated graphical content.

11. The frame buffer device of Claim 1 wherein the key data specifies which of overlapping ones of the display components is visible for at least one of the portions.

12. The frame buffer device of Claim 1 wherein the display logic produces frames of the displayed image at a display frame rate which is different from an incoming frame rate of the motion video signal.

**13.** The frame buffer device of Claim 1 wherein the display logic produces frames of the displayed image in a display phase which is different from an incoming phase of the motion video signal.

**14.** A method for displaying an image, the method comprising:

for each portion of a two or more portions of the image:

i. identifying a selected frame buffer of two or more frame buffers wherein the selected frame buffer stores data representing the portion of the image;
ii. causing the portion of the image to be displayed from the selected frame buffer.

**15.** The method of Claim 14 wherein at least one of the two or more portions of the image includes at least a part of a background display content.

**16.** The method of Claim 15 wherein at least one of the two or more portions of the image represents a motion video signal.

**17.** The method of Claim 16 further comprising:

identifying a degree of opacity of the motion video signal;
further wherein (ii) causing comprises:

blending the motion video signal with the background display content according to the degree of opacity.

**18.** The method of Claim 14 wherein each portion of the two or more portions is a pixel.

**19.** The method of Claim 14 wherein causing comprises:

applying an address signal to the two or more frame buffers to access the two or more frame buffers with a single address signal.

**20.** A method for displaying a composite image which includes two or more display components, the method comprising:

performing the following steps independently and concurrently for each of the two or more display components:

i. selecting one of two or more frame buffers into which to write incoming display data for the display component;
ii. upon completion of a portion of the display component, recording a complete one of the frame buffers as storing the complete portion; and
iii. incorporating the completed portion of the display component from the complete frame buffer into the composite display.

**21.** A method for incorporating display of a motion video signal into a composite display which includes the display of the motion video signal and display content other than the motion video signal, the method comprising:

a. designating a write one of two or more frame buffers to which an incoming frame of the motion video signal is written;
b. upon completion of writing the incoming frame to the write frame buffer,

i. recording the write frame buffer as a most recently completed frame buffer; and
ii. designating a new write one of the frame buffers to which a next incoming frame of the motion video signal is written, wherein the new write frame buffer is different from the most recently completed frame buffer;

c. incorporating the completed incoming frame of the motion video signal into the composite display by retrieving the completed incoming frame from the most recently completed frame buffer and retrieving the display content other than the motion video signal from a different one of the frame buffers.

DISPLAY 102

```
MOTION
VIDEO
WINDOW
104A
```

```
MOTION VIDEO
WINDOW
104B
```

~ 106 ~

```
MOTION VIDEO
WINDOW
104C
```

# FIGURE 1

FIGURE 2

EP 1 589 521 A2

EP 1 589 521 A2

FIGURE 3

400

402

404

WRITE H-SYNC(I)

X COUNTER = X0

Y COUNTER =
Y COUNTER + INCREMENT

END

**FIGURE 4**

800

802

READ V-SYNC

COPY ALL NEXT READ FRAME
POINTERS TO RESPECTIVE
READ FRAME POINTERS

END

**FIGURE 8**

## FIGURE 5

```
        ┌─────────────────┐
        │  WRITE V-SYNC(I) │  ← 500
        └─────────────────┘
                 │
                 ▼
        ┌─────────────────┐
        │ X COUNTER = X0  │  ← 502
        └─────────────────┘
                 │
                 ▼
        ┌─────────────────┐
        │ Y COUNTER = Y0  │  ← 504
        └─────────────────┘
                 │
                 ▼
    ┌─────────────────────────┐
    │ NEXT_READ_FRAME(I) =    │  ← 506
    │    WRITE_FRAME(I)       │
    └─────────────────────────┘
                 │
                 ▼
           ╱─────────╲        YES      ┌─────────────────────┐
          ╱ Y_READ <   ╲───────────────│ READ_FRAME(I) =     │ ← 510
          ╲   Y0      ╱                 │   WRITE_FRAME(I)    │
           ╲─────────╱                  └─────────────────────┘
             │  ← 508                            │
             │ NO                                │
             ▼◄──────────────────────────────────┘
    ┌─────────────────────┐
    │   PICK NEW          │  ← 512
    │   WRITE_FRAME(I)    │
    └─────────────────────┘
             │
             ▼
         ┌───────┐
         │  END  │
         └───────┘
```

**FIGURE 5**

## FIGURE 6

```
        ┌─────────────────┐
        │   PICK NEW       │  ← 512
        │  WRITE_FRAME(I)  │
        └─────────────────┘
                 │
                 ▼
          ╱───────────────╲       NO      ┌─────────────────────┐
         ╱ NEXT_READ_FRAME(I)╲─────────────│  WRITE_FRAME(I)=A   │ ← 604
         ╲ OR READ_FRAME(I) = A?           └─────────────────────┘
          ╲───────────────╱  ← 602                   │
                 │ YES                                │
                 ▼                                    │
          ╱───────────────╲       NO      ┌─────────────────────┐
         ╱ NEXT_READ_FRAME(I)╲─────────────│  WRITE_FRAME(I)=B   │ ← 608
    606→ ╲ OR READ_FRAME(I) = B?           └─────────────────────┘
          ╲───────────────╱                           │
                 │ YES                                 │
                 ▼                                     │
    ┌─────────────────────┐                            │
    │  WRITE_FRAME(I)=C   │  ← 610                      │
    └─────────────────────┘                            │
                 │                                     │
                 ▼◄────────────────────────────────────┘
             ┌───────┐
             │  END  │
             └───────┘
```

**FIGURE 6**

EP 1 589 521 A2

19

**FIGURE 7**

FIGURE 9

EP 1 589 521 A2

FIGURE 10

EP 1 589 521 A2

**FIGURE 11**

EP 1 589 521 A2

102B

1204A    1206A

1206C

1204C

1206B

1204B

~1206D~

**FIGURE 12**

202B

1204A    1206

1204C

1204B

~1206~

**FIGURE 13**